# EUROPÄISCHE PATENTANMELDUNG

(11) **EP 0 708 306 A1**
(43) Veröffentlichungstag der Anmeldung: **24.04.1996**
(21) Anmeldenummer: 95115490.5
(22) Anmeldetag: 30.09.1995
(51) Int. Cl.: G01B 7/02, G01B 7/14, G01P 3/56

(54) **Vorrichtung zur berührungslosen Messung der axialen Lage und/oder der Winkelverdrehung von zwei rotierenden Körpern**

(30) Priorität: 17.10.1994 DE 4437017
(71) Anmelder: INSTITUT FÜR MIKROSTRUKTURTECHNOLOGIE UND OPTOELEKTRONIK (IMO) e.V., D-35578 Wetzlar (DE); FICHTEL & SACHS AG, D-97424 Schweinfurt (DE)
(72) Erfinder: Andrä, Wulf, Dr. Dipl.-Phys., D-07749 Jena (DE); Dettmann, Fritz, Dr. Dipl.-Phys., D-35764 Sinn (DE); Loreit, Uwe, Dipl.-Phys., D-35580 Wetzlar (DE); Nagler, Franz, Dipl.-Ing., D-97503 Gädheim (DE); Reusing, Günter, Dr. Dipl.-Ing., D-97764 Niederwerm (DE)
(74) Vertreter: Schubert, Siegmar, Dipl.-Ing.

(57) **Zusammenfassung**

Vorrichtung zur berührungslosen Messung der axialen Lage und/oder der gegenseitigen Winkelverdrehung von zwei mit gleicher mittlerer Drehzahl rotierenden Körpern insbesondere von zwei Teilen einer Kupplung, gekennzeichnet durch die folgenden Merkmale:
- mit den beiden rotierenden Körpern ist jeweils ein magnetischer Geber verbunden,
- ein einziger Magnetfeldsensor ist raumfest außerhalb der Geber und in deren Meßbereich angeordnet,
- die beiden Geber haben Aussparungen, in die der jeweils andere Geber hineinragt, so daß zumindest in der Ruhelage die Ränder beider rotierender Körper sich im wesentlichen in der gleichen Ebene befinden, in der auch der Magnetfeldsensor angeordnet ist.

## Beschreibung

Die Erfindung betrifft eine Vorrichtung zur berührungslosen Messung der axialen Lage und kleiner Differenzen der axialen Lage und/oder der gegenseitigen Winkelverdrehung und/oder der Rotationsfrequenz von zwei mit gleicher mittlerer Drehzahl rotierenden Körpern, insbesondere von zwei Teilen einer Kupplung, wobei mit den beiden koaxial rotierenden Körpern jeweils eine magnetische Scheibe verbunden ist, deren Rand sich bei Rotation der Körper innerhalb einer Umdrehung mehrfach in axialer Richtung gegenüber einem einzigen Magnetfeldsensor hin und her bewegt, der raumfest außerhalb der magnetischen Scheibe angeordnet ist.

Eine derartige Vorrichtung beschreibt die DE 42 13 507 C2. Dort hat der Körper einen gewellten Rand, dem der Sensor gegenüberliegt.

Um die Lage und insbesondere die gegenseitige Lage von zwei rotierenden Körpern zu ermitteln, wären danach zwei Geberscheiben und zwei Sensoren notwendig. Der dazu notwendige Abstand zwischen den Geberscheiben und Sensoren muß sehr genau und damit aufwendig justiert werden, wenn die Differenz zwischen der axialen Lage und der beiden Körper gering gegen den Abstand ist. Außerdem würde eine Taumelbewegung der beiden Scheiben einen zusätzlichen Meßfehler verursachen. Driften der Offset-Spannung der beiden Sensoren, beispielsweise bei Temperaturänderungen, müssen hier sehr klein gehalten oder mit hohem Aufwand sehr genau ermittelt werden, damit die erforderliche Genauigkeit bei der Bestimmung der geringen Werte der gegenseitigen axialen Verschiebung der beiden Teile erreicht werden kann.

Aus der Offenlegungsschrift DE 24 35 286 ist ein Drehmomentmeßgerät bekannt, bei dem die Torsion einer Welle mit einem einzigen Magnetfeldsensor gemessen wird. Dazu sind in einem bestimmten Abstand in axialer Richtung auf der Welle zwei Zahnräder koaxial mit der Welle verbunden. Die Zähne der beiden Zahnräder reichen jedoch in axialer Richtung weit über den Bereich ihrer Verbindung mit der Welle hinaus, so daß sie in einen bestimmten Abschnitt der Welle mit gegenseitigem Abstand in tangentialer Richtung ineinandergreifen. Über diesem Abschnitt ist in radialer Richtung der Magnetfeldsensor angeordnet. Bei Anliegen eines Drehmoments ändert sich durch die Torsion der Welle der gegenseitige tangentiale Abstand der verlängerten Zähne. Bei gleichmäßiger Rotation der Welle kann dieser veränderte Abstand aus entsprechend unterschiedlichen Zeitabschnitten ermittelt werden, die mit Hilfe des feststehenden Sensors gemessen wurden. Die Zähne sind in axialer Richtung lang ausgeführt, so daß eine mögliche axiale Verschiebung der beiden Zahnräder gegeneinander keinen Einfluß auf die Messung der Zeitabschnitte hat, da nur so der exakte Wert des Drehmomentes bestimmbar ist.

Eine ähnliche Anordnung wird in der Offenlegungsschrift DE 41 29 344 A1 zur Messung eines Winkels zwischen zwei koaxial nebeneinander rotierenden Wellen angegeben, wobei wieder nur ein einziger, von der Welle entfernter Magnetfeldsensor den Vorbeigang mindestens je eines Zahnes detektiert, der an einer der beiden Wellen angebracht und in axialer Richtung so verlängert ist, daß es einen axialen Überschneidungsbereich der Zähne der beiden Wellen gibt, in dem sich der Sensor radial in geringer Entfernung befindet. Auch hier ist die axiale Position der Wellen oder der Zähne nicht bestimmbar.

In der Offenlegungsschrift DE 38 21 083 A1 wird ein anderes Drehmomenterfassungsgerät vorgestellt. Hier werden in einem bestimmten Abstand auf einer durch das angreifende Drehmoment zur Torsion vorgesehenen Welle zwei Hülsen durch in radialer Richtung ausgedehnte Zwischenteile befestigt. Damit wird die Verdrehung der Welle an den Befestigungsorten jeweils auf die gesamte Hülse übertragen. Beide Hülsen sind bis auf einen schmalen Spalt zusammengeführt. Nahe am Spalt wird jeweils auf den Hülsenumfang ein periodisches Magnetmuster aufgebracht. Am Ort des Spaltes in radialer Richtung ist ein Sensorchip mit Magnetfeldsensoren angebracht, der mit seiner Fläche jeweils dem Magnetmuster gegenübersteht. Auf der Chipfläche befinden sich jedoch zwei Magnetfeldsensorelemente, die an die beiden auf dem Hülsenumfang aufgebrachten Magnetmuster angepaßt sind. Nachteiligerweise müssen die beiden Magnetfeldsensorelemente einzeln mit Betriebsspannung versorgt und mit einer Auswerteschaltung versehen werden. Axiale Verschiebungen sind auch hier nicht meßbar.

Der Erfindung liegt somit die Aufgabe zugrunde, eine Vorrichtung zu schaffen, mit der auf insbesondere konstruktiv einfache Weise die axiale Lage und kleine Differenzen der axialen Lage und/oder die gegenseitige Winkelverdrehung von zwei rotierenden Körpern und die Rotationsfrequenz berührungslos und mit hoher Genauigkeit gemessen werden kann.

Die Lösung dieser Aufgabe erfolgt erfindungsgemäß dadurch, daß die Ränder der beiden Scheiben über bestimmte Bereiche des Umfanges Aussparungen aufweisen, in die der Rand der jeweils anderen Scheibe hineinragt, so daß dem Sensor bei Rotation der Teile abwechselnd der Rand der Scheibe des ersten Teils oder der des zweiten Teils oder zwischen beiden Rändern vorhandene Lücken gegenüberstehen, daß die Ränder der beiden Scheiben ohne axiale Verschiebung im Mittel in der Ebene senkrecht zur Achse liegen, in der sich auch der Magnetfeldsensor befindet und daß die Ränder der Scheiben der beiden Teile so gestaltet sind, daß die von ihnen bei Rotation der Teile erzeugten Ausgangssignale des Sensors charakteristische Unterschiede aufweisen.

Die Erfindung gestattet es somit, mit nur einem Sensor und zugehöriger Signalauswertung z.B. an der Kupplung eines Kfz, die Lage der Schwungscheibe und der Kupplungsdruckplatte in axialer Richtung und deren gegenseitige Verdrehung zu ermitteln. Aus diesen Informationen ist es möglich, durch ein entsprechendes Auswerteverfahren folgende für die Kupplung und den Motor wichtigen Größen zu berechnen:
1. die axiale Lage der Schwungscheibe, welche z.B. durch Kurbelwellenspiel verursacht wird,
2. die axiale Lage der Anpreßplatte, die sich durch Betätigung der Kupplung relativ zur Schwungscheibe ändert,
3. die Differenz der beiden axialen Lagen ergibt den Öffnungszustand der Kupplung,
4. die minimale Lagedifferenz bei geschlossener Kupplung entspricht der Dicke der Kupplungsscheibe und damit ihrem Abnutzungsgrad,
5. die Drehzahl des Motors ist in der Frequenz der Ausgangsimpulsfolgen enthalten,
6. die Winkelverdrehung zwischen Schwungscheibe und Anpreßplatte macht es möglich, bei einer elastischen Kopplung beider das an der Kupplung wirkende Drehmoment zu erfassen.

Die Erfindung wird im folgenden anhand eines Ausführungsbeispiels näher erläutert, aus dem sich weitere wichtige Merkmale ergeben. Es zeigt:
- **Fig. 1**: eine Ansicht der Geber-Sensoranordnung in radialer Richtung;
- **Fig. 2**: eine Ansicht der Geber-Sensoranordnung in axialer Richtung;
- **Fig. 3**: den Verlauf der Bewegung der Ränder von Teil 1 und 2 gegenüber dem Sensor und der dazugehörige Ausgangssignalverlauf;
- **Fig. 4**: den Verlauf der Bewegung der Ränder von Teil 1 und 2 gegenüber dem Sensor und der dazugehörige Ausgangssignalverlauf bei veränderter axialer Lage von Teil 1 und 2 und einer gegenseitigen Winkelverdrehung.

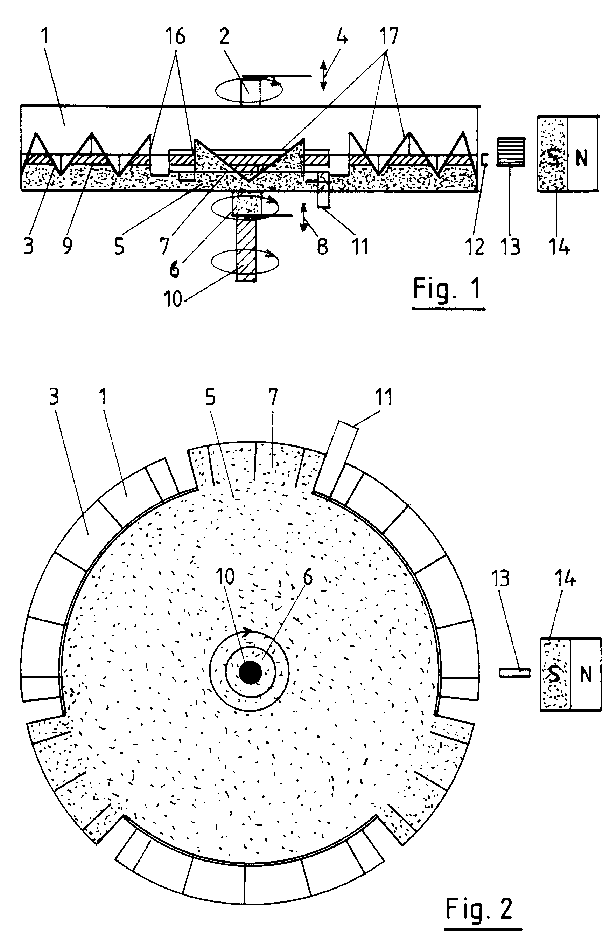

Durch die in Figur 1 dargestellte Erfindung ist es möglich, mit einem einzigen Sensor zeitversetzt die Positionsinformationen der beiden zu messenden Körper zu erhalten. Diese wird dadurch erreicht, daß die Ränder 3 und 7 der beiden rotierenden Körper 1 und 5 in verschiedenen Randbereichen sich auf derselben axialen Position 15 befinden, da in die Ausschnitte des einen Körpers der Rand des anderen hineinragt.

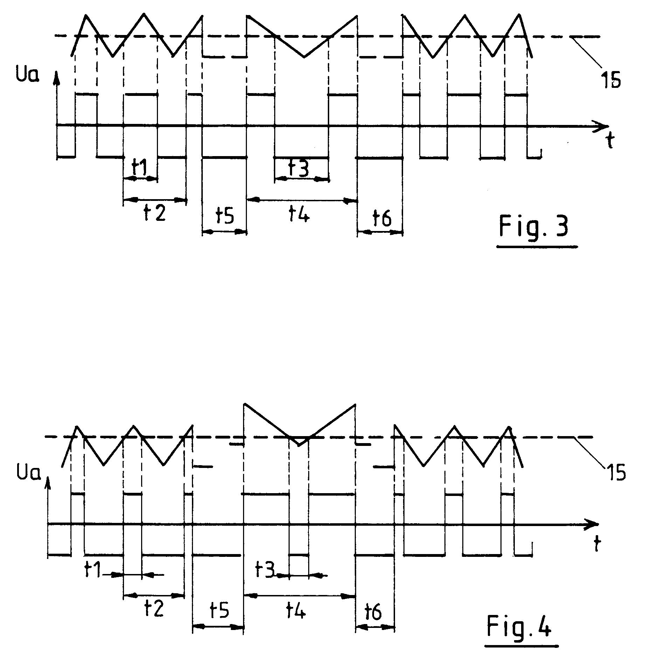

Dieses ist in Figur 2 dargestellt. Die Position 15 wird durch die Lage des Sensors 13 bestimmt. Die wellenförmig gestalteten Randbereiche 17 beider Körper erzeugen bei der Rotation in dem sich im Randbereich befindlichen Sensor 13 eine Impulsfolge wie sie z. B. in Figur 3 und 4 dargestellt ist, die sich abwechselnd aus Impulsen der Schwungscheibe 1 und zeitversetzt aus Impulsen der Andruckplatte 5 zusammensetzt.

Im oberen Teil der Fig. 3 und der Fig. 4 ist die seitliche Aufsicht auf die Ränder 3 und 7 der Scheiben des Teiles 1 und des Teiles 2 dargestellt. Um eine einfache Zuordnung des jeweiligen Verlaufs der Ränder 3 und 7 zu den Ausgangsimpulsen des Sensors mit dem nachgeschalteten Komparator in der Zeichnung zu ermöglichen, ist für die Zeitachse t ein nichtlinearer Maßstab gewählt worden. Beispielsweise haben in Fig. 3 die ersten beiden positiven Impulse jeweils die Dauer t₁, da sie vom Rand 3 des ersten Teiles 1 mit identischer Periodenlänge erzeugt worden sind.

Aus den Impulstastverhältnissen der jeweiligen Bereiche t1 zu t2 bzw. t3 zu t4 lassen sich die jeweiligen axialen Lagen 4 und 8 berechnen. Aus der Differenz der beiden Positionen läßt der Abstand zwischen Schwungscheibe 1 und der Andruckplatte 5 und damit der Öffnungszustand der Kupplung bestimmen. Der kleinstmögliche Abstand wird durch die Dicke 12 der sich zwischen beiden befindlichen Kupplungsscheibe 9 bestimmt. Sie läßt sich bei geschlossener Kupplung ermitteln und ist ein Maß für den Verschleiß der Kupplungsscheibe 9.

Wird die Verbindung zwischen der Schwungscheibe 1 und der Andruckplatte 5 auch in Drehrichtung mit einer definierten Elastizität versehen, so tritt durch die beim Schließen der Kupplung auftretende Reibung eine definierte Verdrehung zwischen Schwungscheibe 1 und der Andruckplatte 5 ein. Die dadurch verursachte Veränderung des tangentialen Abstandes 11 der beiden Teile 1 und 4 und dadurch auch der durch sie erzeugten Impulsgruppen t5 und t6 enthält diese Information.

Sie ist direkt proportional zum Drehmoment am Ausgang der Kupplung. Um diese Information einfacher gewinnen zu können, ist es hilfreich, an den Rändern 3 und 7 beider Teile 1 und 5 an bestimmten Positionen sprungartige Seitenwechsel 16 vorzusehen. An diesen Positionen entstehen in den dazugehörigen Impulsfolgen von der axialen Lage 4 und 8 unabhängige Schaltflanken, die einfacher auswertbar sind (vgl. DD-257 178-A3).

### Bezugszeichenliste

- 1.: Teil 1 (Schwungscheibe)
- 2.: Achse von 1 (Motorseite, Kurbelwelle)
- 3.: Rand des Teiles 1
- 4.: axiale Position des Teiles 1
- 5.: Teil 2 (Anpreßplatte)
- 6.: Achse des Teiles 2
- 7.: Rand des Teiles 2
- 8.: axiale Position des Teiles 2
- 9.: Teil 3 (Kupplungsscheibe)
- 10.: Achse des Teiles 3 (Getriebeseite)
- 11.: radialer Abstand zwischen Teil 1 und 2
- 12.: Dicke der Kupplungsscheibe
- 13.: Sensor
- 14.: Magnet
- 15.: Schaltposition des Sensors
- 16.: Position an den Rändern von Teil 1 und 2, bei denen der Rand sprungartig die Seite wechselt
- 17.: Randbereiche von Teil 1 und 2, in denen der Seitenwechsel kontinuierlich erfolgt
- Ua: Ausgangssignal des Sensors
- t1: Einschaltzeit während der Vorbeibewegung des Randes von Teil 1
- t2: Ausschaltzeit während der Vorbeibewegung des Randes von Teil 1
- t3: Ausschaltzeit während der Vorbeibewegung des Randes von Teil 2
- t4: Einschaltzeit während der Vorbeibewegung des Randes von Teil 2
- t5: Zeit beim Übergang von Teil 1 zu Teil 2
- t6: Zeit beim Übergang von Teil 2 zu Teil 1

## Patentansprüche

1. Vorrichtung zur berühungslosen Messung der axialen Lage und kleiner Differenzen der axialen Lage und/oder der gegenseitigen Winkelverdrehung und/oder der Rotationsfrequenz von zwei mit gleicher mittlerer Drehzahl rotierenden Körpern, insbesondere von zwei Teilen einer Kupplung, wobei mit den beiden koaxial rotierenden Körpern jeweils eine magnetische Scheibe verbunden ist, deren Rand sich bei Rotation der Körper innerhalb einer Umdrehung mehrfach in axialer Richtung gegenüber einem einzigen Magnetfeldsensor hin und her bewegt, der raumfest außerhalb der magnetischen Scheiben angeordnet ist,
**dadurch gekennzeichnet**,
daß die Ränder (3;7) der beiden Scheiben über bestimmte Bereiche des Umfanges Aussparungen aufweisen, in die der Rand (3;7) der jeweils anderen Scheibe hineinragt, so daß dem Sensor (13) bei Rotation der Teile (1;5) abwechselnd der Rand (3;7) der Scheibe des ersten Teils (1) oder der des zweiten Teils (5) oder zwischen beiden Rändern (3;7) vorhandene Lücken gegenüberstehen, daß die Ränder (3;7) der beiden Scheiben ohne axiale Verschiebung im Mittel in der Ebene (15) senkrecht zur Achse (2,10) liegen, in der sich auch der Magnetfeldsensor (13) befindet und daß die Ränder (3;7) der Scheiben der beiden Teile (1;5) so gestaltet sind, daß die von ihnen bei Rotation der Teile (1;5) erzeugten Ausgangssignale des Sensors charakteristische Unterschiede aufweisen.

2. Vorrichtung nach Anspruch 1,
**dadurch gekennzeichnet**,
daß die Ränder (3;7) der Scheiben gewellt sind.

3. Vorrichtung nach Anspruch 2,
**dadurch gekennzeichnet**,
daß die Periodenlänge der gewellten Ränder (3;7) der beiden Teile (1;5) unterschiedlich ist.

4. Vorrichtung nach Anspruch 2,
**dadurch gekennzeichnet**,
daß die Zahl der Perioden der gewellten Ränder (3;7) der beiden Teile (1;5), die zwischen den Ausnehmungen vorhanden sind, unterschiedlich ist.

5. Vorrichtung nach einem der Ansprüche 1 - 4,
**dadurch gekennzeichnet**,
daß eine Triggerschaltung vorgesehen ist, die so eingestellt ist, daß sie beim Nulldurchgang der axialen Komponente des Magnetfeldes von einem Ausgangssignalpegel auf einen anderen umschaltet.

6. Vorrichtung nach einem der Ansprüche 1 - 5,
**dadurch gekennzeichnet**,
daß eine Auswerteschaltung vorgesehen ist, die aus den Tastverhältnissen (t₁/t₂;t₃/t₄) der Dauer des jeweils ersten Spannungspegels am Triggerausgang zur Dauer des jeweils zweiten Spannungspegels die axialen Positionen der beiden rotierenden Körper ermittelt.

7. Vorrichtung nach Anspruch 1 oder 2,
daß die Ränder der beiden Scheiben an die Aussparungen angrenzende Bereiche haben, in denen der Rand sprungartig die Seite wechselt.

8. Vorrichtung nach Anspruch 7,
**dadurch gekennzeichnet**,
daß eine Auswerteschaltung vorgesehen ist, die aus dem Tastverhältnis (t₅/t₆) der Impulse, die durch die Bereiche des Randes, die an die Aussparungen angrenzen, erzeugt werden, die gegenseitige Winkelverdrehung der beiden rotierenden Teile (1;5) ermittelt.

9. Vorrichtung nach einem der Ansprüche 1 - 8,
**dadurch gekennzeichnet**,
daß eine Auswerteschaltung vorgesehen ist, die die mittlere Drehzahl der beiden rotierenden Teile (1;5) ermittelt.
